# EUROPEAN PATENT APPLICATION

(11) **EP 3 975 009 A1**
(43) Date of publication of application: **30.03.2022**
(21) Application number: 19955394.2
(22) Date of filing: 17.12.2019
(51) Int. Cl.: G06F 16/901, G06F 16/9032, G06F 16/9038

(54) **METHOD FOR PROCESSING SEARCH QUERIES FOR PLURALITY OF UNSTRUCTURED RELATIONAL DATABASES**

(30) Priority: 03.12.2019 RU 2019139360
(71) Applicant: Public Joint Stock Company Aeroflot-Russian Airlines, Moscow, 119019 (RU)
(72) Inventor: BOLSHAKOV, Dmitrii Nikolaevich, Moscow, 119270 (RU); KUZIN, Roman Valerevich, Moscow, 107076 (RU); GAVRILOVA, Olga Anatolevna, Moscow, 115470 (RU); KHOVRICH, Mariia Aleksandrovna, Moscow, 117465 (RU)
(74) Representative: Ingenias Creaciones Signos e Invenciones S.L.P.
(86) International application number: PCT/RU2019/000954
(87) International publication number: WO 2021/112712

(57) **Abstract**

The invention relates to a method for processing search queries for a plurality of unstructured relational databases, wherein each of the databases comprises preset report forms with preset record display forms in reports, the method consisting in the following: records in databases are indexed by forming a common index, and preferential record display forms are used for indexing each data record; after an initial search query is made, the query terms are converted into terms corresponding to the preferential record display forms; relevant records are searched for using the converted query terms; the preset report forms which use the relevant records found are determined; and a report is generated about the relevant records, found as a result of the search, using, to display the found relevant records, the preset report forms that use the found relevant records.

## Description

### Field of invention

The invention relates to information systems and is intended for search for information in sources using different formatting of the source data, and can be used to search for and present the data in cases when completeness and accuracy of perception of the requested information are essential. Preferable sphere of use includes dispatch systems, financial systems and other professional activities where personnel must use work-related information with maximum efficiency.

### State of the art

Currently, search for information in databases, especially in a plurality of unstructured relational databases (including in different information systems), takes a lot of time, since it requires involvement of users, including a large number of users, for manual processing of input queries.

To search for the data, it is necessary to know in which particular database the required information is stored, and to evaluate its supposed completeness and relevance, which may require significant work time and may result in additional queries. Access to databases using end-user computing devices, e.g. portable devices (mobile end-user computing devices) is, in many cases, difficult or impossible. To retrieve data from a specific database (DB), normally a query to the users operating this database is required, which is time-consuming, meanwhile, quick access to the required specialists is not guaranteed. It is also often impossible to get additional information promptly upon successful retrieval of the requested data. Thus, for example, when general information on a counterparty is received (e.g. in the form of a text file or printout), it is necessary to send repeated queries and wait for their execution in order to obtain a list of contracts with this company and responsible persons. Thus, there is need for a method of processing search queries for a plurality of unstructured relational databases, wherein each database contains preset forms of reports with preset forms of record display in the reports.

The closest invention is a system disclosed in Russian patent for invention RU2703350 published on October 16, 2019, which discloses an engine for processing a search query in a system using databases providing information in different formats. The known method allows information search based on individual user preferences. The drawback of this method is the probability of inaccurate presentation of the information when the system is used by a non-skilled user, and the impossibility of combining different databases within a single system.

### Summary of the invention

The technical result achieved upon the use of the proposed invention is higher accuracy of the search results, quicker processing of search queries, possibility of cross-verification of data for the elimination of errors. The method enables simple and accurate integration of databases, e.g. plant management systems, without transformation of data formats. The invention relates to hardware for searching in multiple sources.

To achieve the technical result, the method for processing search queries for a plurality of unstructured relational databases is disclosed, wherein each of the databases comprises preset report forms with preset record display forms in reports, the method consisting in the following: records in databases are indexed by forming a common index, and preferential record display forms are used for indexing each data record; after an initial search query is made, the query terms are converted into terms corresponding to the preferential record display forms; relevant records are searched for using the converted query terms; the preset report forms which use the relevant records found are determined; and a report is generated about the relevant records, found as a result of the search, using, to display the found relevant records, the preset report forms that use the found relevant records.

In one of the particular embodiments, the preset report forms that use the found records display the records provided by the report forms that are associated with the found records.

In one of the particular embodiments, the results are displayed using more than one report form for a single record.

In one of the particular embodiments, the possibility of accurate correspondence of the found relevant records to the initial terms of the search query is additionally checked, and only the records that can provide accurate correspondence are used for generation of the search report.

In one of the particular embodiments, the converted query terms are used to create a converted query used to search for the relevant records.

In one of the particular embodiments, when alternative terms are found corresponding to the preferable forms of record display for a single search term, several converted queries are created each containing one of the alternative terms.

In one of the particular embodiments, when no relevant records fully corresponding to the query terms are found, a search report is generated containing a list of the relevant records in the format of presentation of the initial query terms.

This invention enables setting up and performing a database search. The search is performed in a closed and ordered system with a plurality of relational databases. Each database record is included in a single class with a unique preset encoding. The record also has a preset encoding, but may have several possible presentation options for conducting search queries. There is a preferable form of presentation for a record and for the classes and databases. The presentation forms are indexed. When a search query is created, the terms in the natural language are translated into the preset encoding, if possible. The terms in the natural language are indexed. If several translation options are possible, they all are used for the search, e.g. by generation of several parallel search queries. The search results are displayed together with the presentation form of the database where the unique record is found. If no results are found, the user is notified of the databases where "similar results" are found, and, after specifying the database, the user is notified of which search terms are missing in the database records. The most similar results are not presented, only accurate results are. The search results are generated based on the results of the clarification.

### Brief description of drawings

Fig. 1 shows a simplified example of hardware embodiment of the proposed system;
Fig. 2 shows an exemplary computing system suitable for embodiment of the elements of the proposed invention;
Fig. 3 shows an exemplary flowchart of an embodiment of the proposed method;
Fig. 4 shows an exemplary flowchart of interaction between a user and the elements of the described system embodying the proposed method;
Fig. 5 shows an exemplary architecture of the system implementing the proposed method;
Fig. 6 shows an exemplary visual presentation of the ontological model;
Fig. 7 shows an example of processing a search query;
Fig. 8 shows an example of the evaluation and an example of processing a search query as a whole.

### Description of embodiments

The operations and elements of the system presented in the description can be embodied using hardware controlled by uploaded software and/or firmware. Possible hardware includes end-user devices, servers, network devices and other devices capable of carrying out the commands and operations of the method both by conversion of machine codes into processor instructions and by performing logical operations allowed by the system hardware configuration. Thus, different systems and computer architectures can be configured for implementation of the described objects, e.g. social platform servers.

A computer network may represent a geographically distributed collection of nodes connected by communication lines and segments for data transmission between terminal nodes such as personal computers, workstations or peripheral devices such as printers or scanners. Many types of networks can be used, from local (LAN) to wide (WAN) area networks.

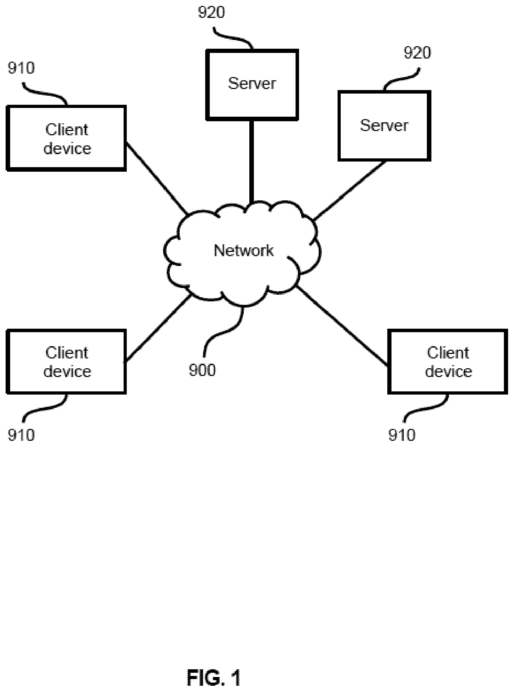

As shown in Fig. 1, an exemplary computer network 900 may contain a plurality of network devices, such as routers, switches, computers, etc. interconnected by communication lines. For example, many network devices can connect one or several end-user devices 910 (or client devices 910), which may be used by the user, such as personal computers, smartphones, tablet PCs, etc. The communication channels connecting different network devices can be wirelines or common environments (e.g. wireless connections), where certain devices may maintain communication with other devices based on the distance, signal level, current operating status, location, etc.

The communication channels may connect different network devices in any possible configuration. One or several servers 920 (e.g., host servers, web servers, databases, etc.) may maintain communication with network 900 and, thus, with a plurality of client devices 910. It will be clear to persons skilled in the art that any amount and layout of nodes, devices, communication lines, etc. can be used in the computer network, and the illustration shown in Fig. 1 is a simplified example of the hardware embodiment of the system.

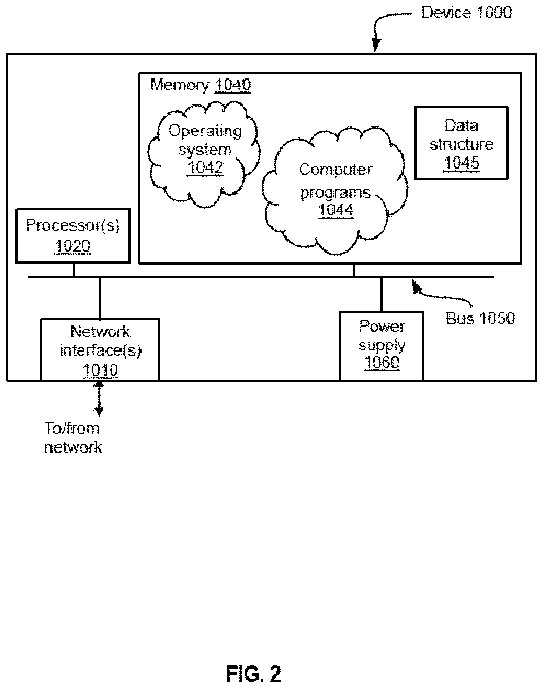

An example of a computing system suitable for implementation of the elements of the proposed invention is shown in Fig. 2. As shown in Fig. 2, the computing system contains a computing device 1000 that can be used as an end-user device or a server, memory 1040 of which stores the operating system 1042, computer programs 1044 and data structures 1045. Memory 1040 of device 1000 is linked, via bus 1050, to power supply 1060, to at least one processor 1020 and with at least one network interface 1010 transmitting data to network 900 (Fig. 1) and from network 900 (Fig.1).

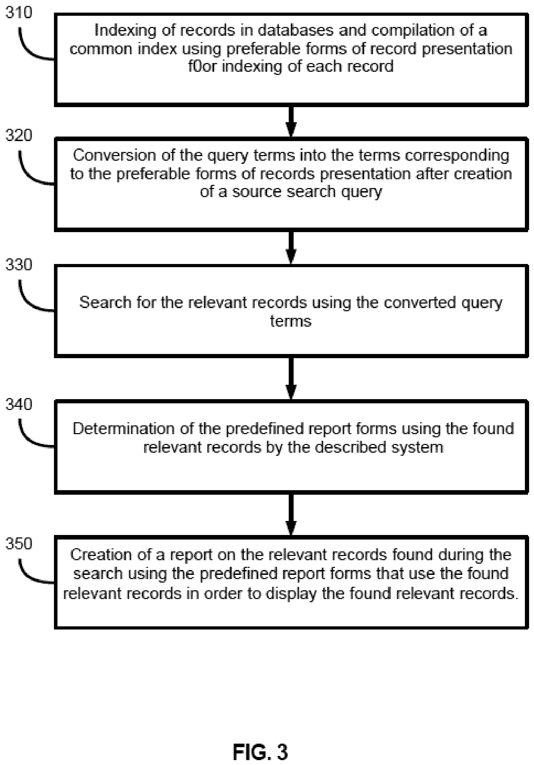

Fig. 3 shows an exemplary flowchart of an embodiment of the proposed method.

Step 310 of the proposed method includes indexing of records in databases using the described system, and compilation of a common index using preferable forms of record display for each record.

The aforementioned relational databases are unstructured databases, wherein each of the databases contains preset forms of reports with preset forms of record display in the reports.

Step 320 includes creation of an initial search query, and, after the initial search query is formed, the query terms are converted into the terms corresponding to the preferable forms of record display using the described system.

In a particular embodiment, the converted query terms are used to create a converted query used to search for the relevant records.

In a particular embodiment, the converted query terms are used to create a converted query used to search for the relevant records.

In a particular embodiment, when alternative terms are found corresponding to the preferable forms of record display for a single search term, several converted queries are created, each containing one of the alternative terms.

Step 330 includes a search for the relevant records by the described system using the converted query terms.

Step 340 includes determination, by the described system, of the preset report forms that use the found relevant records.

Step 350 includes the creation, by the described system, of a report on the relevant records found during the search using the preset report forms that use the found relevant records in order to display the found relevant records.

In a particular embodiment, the preset report forms that use the found records display the records provided by the report forms that are associated with found records.

In a particular embodiment, the results are displayed with an option of using more than one report form for a single record.

In a particular embodiment, the possibility of accurate correspondence of the found relevant records to the initial terms of a search query is additionally checked, and only the records that can provide accurate correspondence are used for generation of the search report.

In a particular embodiment, when no relevant records are found fully corresponding to the query terms, a search report is created containing a list of the relevant records in the format of presentation of the initial query terms.

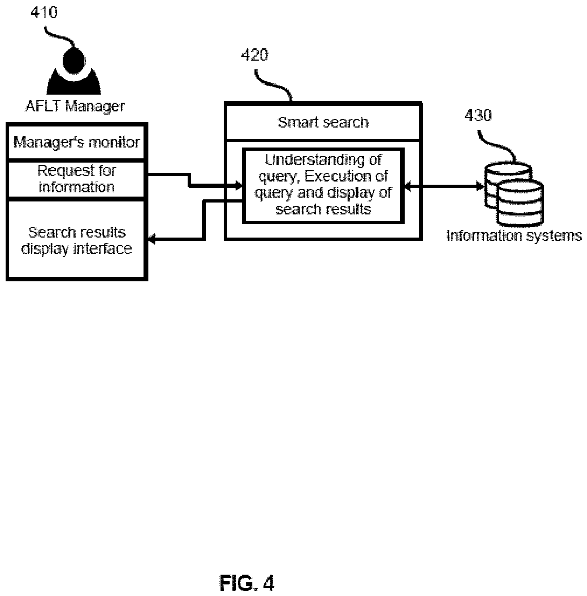

Fig. 4 shows an exemplary chart of an interaction between a user and the elements of the described system embodying the proposed method.

Data search, in particular, smart search (420) is a link between the user, e.g. company manager (410), and information systems (430) whose data is stored in the databases. The search described herein enables arranging the receipt of data as quickly as possible, including by using a minimalistic interface for query input that includes a search field, a voice input button, and a search start button. In a particular embodiment, user query processing may take up to five seconds. The search described herein enables finding the data in a plurality of databases of several information systems simultaneously (IS, CIS - corporate information system), which, in a particular embodiment, are not integrated with each other.

The content of the search results corresponds to the user query as much as possible, as the smart search considers the meaning of the user queries. As a result of the search, hyperlinks to documents or web resources may be displayed along with a complete response to the user query. Since several results may correspond to a single user query, the search results display interface enables selecting and viewing several results that are most relevant to the user query. Thus, the user may have an opportunity to switch between the results of the search queries.

To address the meaning of the search queries, this invention uses semantic technologies (an approach to data presentation in a semantic form representing a triplet of Subject-Predicate-Object), in particular, a semantic description of a subject area - ontology - is created. Ontology is a detailed formalization of a sphere of knowledge using a conceptual schema represented by semantic networks of concepts and relations.

Knowledge bases can be created to describe ontologies.

To obtain (retrieve) knowledge from the data already available in uncoordinated databases, in particular, during ontological modeling, the subject areas of the search are analyzed, including interconnections between the entities located within a plurality of databases. The queries to the ontological model are also performed, in particular, in the form not requiring the user to have special knowledge, but with sufficient flexibility to run different queries.

Data retrieval from information systems created using relational DBMS (database management systems) is possible by different methods, e.g. using SQL queries (SQL - structured query language) or SPARQL queries (SPARQL - RDF Query Language, Resource Description Framework (RDF) is a model for presentation of data, including metadata. RDF is a Semantic Web encoding standard), and a protocol for transmission of these queries and the relevant responses).

In the case of SQL queries, data is extracted through SQL queries (pre-generated or those generated online), and the query is parametrized based on user keywords (SELECT and WHERE blocks).

In the case of SPARQL queries, the ontology data is extracted based on preset SPARQL queries, and the queries are parametrized based on the mapping tables for keywords and classes/properties and dictionaries of the named entities/codes.

In a particular embodiment, the use of SPARQL queries enables a more complicated logic of predefined queries, and the logic of translation of any queries from keywords to SPARQL queries is performed along with the logic of translation of any queries expressed in the natural language into SPARQL queries.

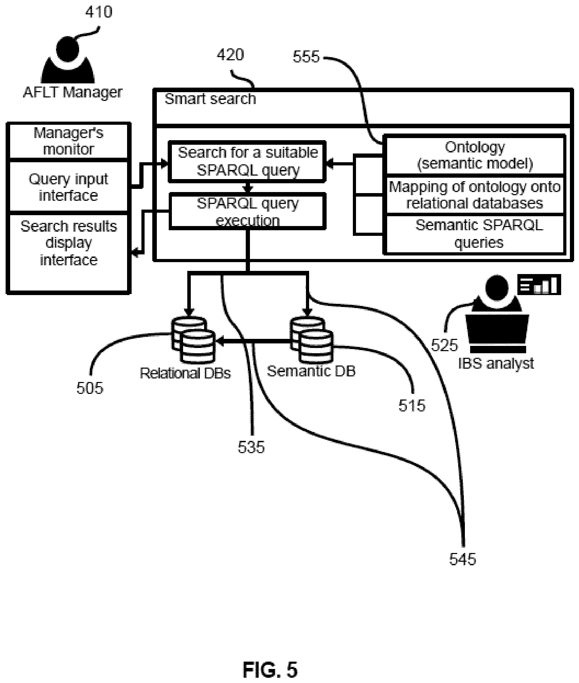

Fig. 5 shows an exemplary architecture of the system embodying the proposed method.

As shown in Fig. 5, this invention includes caching of data (535, 545) transmitted to at least one semantic database 515 and to at least one relational database 505. Within the framework of this invention, ontology (semantic model of subject area) 555 is generated, e.g. in automated mode (by the described system) or by users, e.g. analysts 525, in particular, based on the understanding of the essence of the subject areas and considering the actually available data on these subject areas in the existing information systems. Using (in particular, based on) the ontology, analysts 525 create mapping onto the relational databases 505 of the existing information systems, thus enabling the generation of SQL queries and combining their results. In a particular embodiment, the generation of SQL queries is defined by the SPARQL queries generated by analysts 525, i.e. depending on which data is required, the most efficient SQL query is generated based on a single mapping.

The most suitable SPARQL query can be created, including selection based on the keywords entered by user. If several SPARQL queries correspond to a set of keywords, then all the queries are executed. If it is impossible to select a SPARQL query based on at least one keyword, a general (non-specific) search is performed in the system.

SPARQL queries can be parametrized, e.g. in the form of values, such as values extracted from a search string.

The query results can be displayed to the user, e.g. in the format of a list of the found entities, while, if entities of different types are found, the list is split into several individual blocks. The query results can also be displayed to the user, e.g. in the form of "cards" of the found entities displayed upon selection of a position in the list of the found items.

The entity classes may include, for example:
- Personnel:
   - Pilots/flight crews (captain, other flight crew members);
   - Flight attendants/cabin crew;
   - Visa data of personnel;
- Aircraft:
   - Aircraft (AC);
   - Aircraft models;
   - Aircraft types;
- Flights:
   - Lines;
   - Flight schedule;
   - Flight problems (delayed, cancelled);
- Counterparties and contracts:
   - Counterparty data;
   - Contracts and addenda.

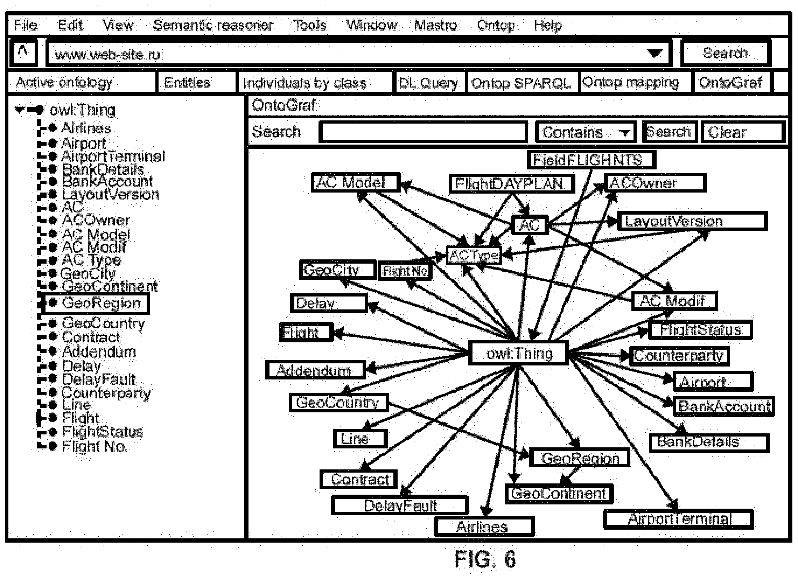

Fig. 6 shows an example of a visual presentation of the ontological model.

The ontological model of the subject area can be saved in a file, e.g. in OWL format (Web Ontology Language - a language used to describe ontologies for a semantic network. The OWL language allows describing the classes and relations between them in for web documents and applications).

After an ontological model is built, mapping onto the existing relational databases (505) of the information systems is created. Generally, one mapping is created for each entity class, and a proprietary mapping is also created for each object property. Mapping can be saved in at least one file, e.g. in one of known formats such as the OBDA format; the mapping file may contain mapping for entity classes and object properties.

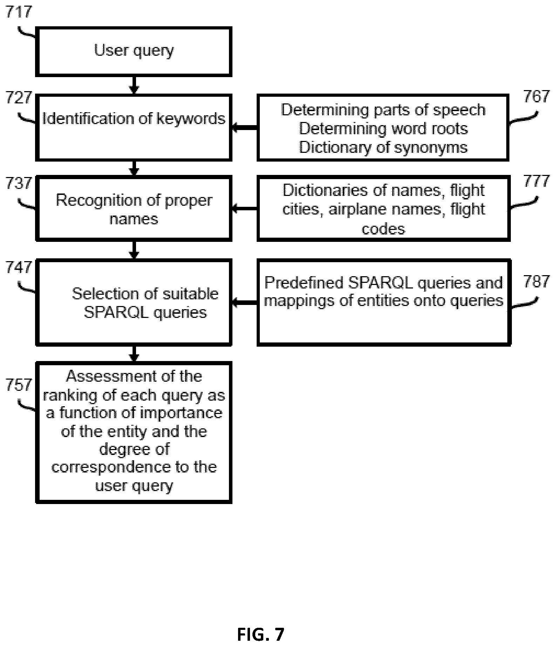

Fig. 7 shows an example of processing a search query.

At step 717, a user enters a (search) query via the user interface (GUI - graphical user interface), in particular, in the search query field (search field).

The search queries entered by the user are pre-processed in three serial steps, 727, 737 and 747.

At step 727, being the first stage of syntactic analysis of a search query, the described system extracts the keywords, including elimination of words without any semantic load (information noise), e.g. conjunctives, interjections, etc., normal word forms are obtained (nominative case, singular), and a search for synonyms is performed in the synonym dictionary, parts of speech are defined, word roots are defined, and a synonym dictionary (767) is used.

Keywords in normal form with an indication of the part of speech (PoS) are a result of elimination of "information noise". The reduction of the query words to the normal form may be performed at the very beginning of step 727 for search through dictionaries (of synonyms and proper names) in the normal form.

In a particular embodiment, after normal word forms are obtained, a list of synonyms is obtained using the linguistic processing methods (in particular, at least one of the known methods). Thus, for example, synonyms for a counterparty, may be taxpayer identification number, company; for a contract - contract, agreement, addendum, supplement, corporate automated document management system; for an AC (aircraft) - airplane, craft, crafts, plane; for a flight number - flights, schedule, schedules, departures; for flight - departures, flights, dispatch, arrivals, flights; for delays - late arrivals, delayed flights; for cancelled flight - cancelled, cancellation, rescheduled, cancel; for an employee - employee, crew, pilot, personnel, passport, visa, employee ID, etc.

At step 737, being the second stage of syntactic analysis of a search query, proper names are identified by the described system, in particular, named entries (named entities) within the query, using dictionaries, e.g. dictionaries of first names, surnames and patronymics, cities, flights, names of airplanes, flight codes (777). Such entities include, for example, flight number, airport name, employee surname, etc. To perform the search for proper names, ontological attributes in which the search is performed are defined for this subject area. All the specified ontological attributes map onto certain table fields of at least one database as described in this invention.

During the syntactic analysis (third stage), keywords can also be compared to the corresponding entities and attributes. Thus, a search query may contain keywords of at least two types. The first type is a keyword that can be correlated to some entity, e.g. the word "flight" can be explicitly correlated to the entity "flight", and it does not require any additional correlation. The second type is a keyword that is an entity parameter or attribute, e.g. the word "Ivanov" is the value of the attribute "Surname" of the entity "Employee". To determine whether a keyword belons to some entity, a search for the keyword is performed in the corresponding reference directories.

At step 747, using the described system, suitable SPRQL queries are selected from preset SPRQL queries, and entities are mapped to queries (787). The generated SPARQL queries may include SPARQL queries of several types, e.g. they can include queries determining a list of the search results (list of results presented to the user, e.g. in the left part of the screen), and the queries determining the contents of the card presented to the user, e.g. in the right part of the screen.

The first type of queries is normally used for quick extraction of the desired entities, and the second type of queries is used for extraction of additional entity parameters and associated entities that may be of interest to the user. The queries of the second type in total generate a displayed card with the query results.

Several queries of the aforementioned second type are used, wherein, if the number of queries equals one, the search results (e.g. the aforementioned "card") can be displayed in the format of a table or a list, and if the number is more than one, the search results presented to the user may have a complex structure, e.g. may form two or more linked tables.

To generate the data required by the user based on SPARQL queries, such queries include certain filtering conditions. Below is an example of a SPARQL query:
[QueryItem="AllLines"]
PREFIX: 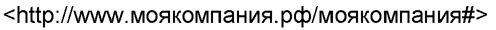
SELECT *
WHERE {
   ?Line:Line_ID ?ID.
   ?Line :Line_CodeAirports ?CodeAirports.
   ?Line :Line_CodeCities ? CodeCities.
   ?Line :Line_CodeReturnCities ? CodeReturnCities.
   ?Line :Line_CodeFlightType ? Line_CodeFlightType.
   ?Line :Line_TargetRegion ? Line_TargetRegion.
   }

For application of a filter, a SPARQL query contains a marker for substitution of a substring with a particular value from a search query. The substitution marker may be highlighted by one of known symbols, e.g. "@" at the beginning and the end, and it is included in the filtering condition (FILTER regex(?CodeAirports, "@AirportCode@", "i")), as shown in the query example below:
[QueryItem="AllLines"]
PREFIX: 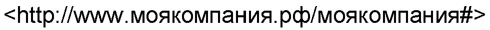
SELECT *
WHERE {
   ?Line:Line_ID ?ID .
   ?Line :Line_CodeAirports ?CodeAirports .
   FILTER regex(?CodeAirports, "@AirportCode@", "i") .
   ?Line :Line_CodeCities ? CodeCities .
   ?Line :Line_CodeReturnCities ? CodeReturnCities .
   ?Line :Line_CodeFlightType ? Line_CodeFlightType .
   ?Line :Line_TargetRegion ? Line_TargetRegion .
   }

Before the execution of the query, "@AirportCode@" is replaced by a particular IATA code of the airport (IATA airport code is a three-letter unique identifier assigned to the airports across the world by the travel Air Transport Association) present in the user search query, e.g. SVO (Sheremetyevo) or VKO (Vnukovo). Symbol "i" enables executing the search disregarding the register of the characters.

To specify a search substring (non-empty contiguous part of the string, e.g. entered in the form field as a search query), different conditions of regular expressions can be used, including known ones. Regular expressions are a formal language for search and manipulations with substrings in the text based on the use of wildcard characters. A sample string or pattern consisting of characters and wildcards that defines the search rule is used for the search. In a particular embodiment of substring search, a ".*Substring.*" can be specified, and ".*" can be used to specify any values (if the condition is not set by the user in the search query).

To perform mapping of keywords onto SPARQL queries based on the identified keywords and selected synonyms, suitable SPARQL queries are selected. Several queries can be mapped to one set of keywords, since the same keyword can be included in different ontological classes (entities). To implement such a concept, keywords must be mapped for each ontological class in the form of Table 1 presented below.

**Table 1 - Mapping of keywords onto entities.**

| NO. | ONTOLOGY CLASS | KEYWORDS |
|---|---|---|
| 1. | AC | Airplane, plane, aircraft, AC, air, transport |
| 2. | AC model | Model, AC model |
| 3. | Airlines | Lines, airlines, destination |
| 4. | Airport | Airport, port, city, terminal |
| 5. | Counterparty | Counterparty, taxpayer ID, company, enterprise, LLC, OJSC, CJSC, PJSC |
| 6. | Pilot | Pilot, pilot-in-command, co-pilot |
| 7. | Contract | Contract, agreement, addendum |
| 8. | Addendum | Addendum, supplementary agreement |

After an ontological class (or several classes) is (are) determined based on the keywords, a list of SPARQL queries to be executed is determined. Such a mapping can be presented in the form of Table 2 as shown below.

**Table 2 - Mapping of entities onto SPARQL queries.**

| NO. | ONTOLOGY CLASS | MAIN SPARQL QUERY | ADDITIONAL SPARQL QUERIES |
|---|---|---|---|
| 1. | AC | Search for an aircraft based on conditions | Search for aircraft model |
| | | | Search for aircraft type |
| | | | Search for the routes where the aircraft is engaged |
| 2. | AC model | Search for an aircraft model based on conditions | Search for aircraft type Search for a list of aircraft based on a model |
| 3. | Airlines | Search for airlines based on an airport | Search for information on the start airport and its terminals |
| | | Search for an airline based on a city | Search for information on the end airport and its terminals |
| | | | Search for airline statistics |
| 4. | Airport | Search for an airport based on conditions | Search for airport terminals |
| | | | Search for a city, country and region where the airport is located |
| 5. | Counterparty | Search for a counterparty based on a name | Search for a counterparty's contracts |
| | | | Search for contract statistics for a counterparty |
| | | | Search for contract addenda |
| 6. | Pilot | Search for a pilot by name | Search for a pilot's awards |
| | | | Search for a pilot's training |
| | | | Search for a pilot's permits |
| 7. | Contract | Search for a contract by date | Search for the addenda associated with the main contract |
| | | Search for a contract by counterparty | Search for information on a counterparty |
| | | | Search for statistics on contracts |
| 8. | Addendum | Search for an addendum by counterparty | |

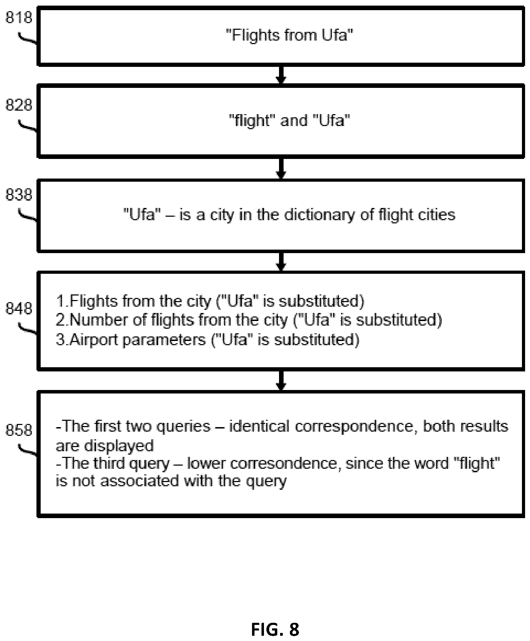

At step 757, the described system is used to evaluate the ranking of each query as a function of importance of an entity and degree of conformity to the user query. The importance of each of these queries is evaluated, for example, in the form of an individual ranking structure of SPARQL queries based on the weights of the entities and the percentage of matching keywords in a search query. For an exemplary evaluation and an example of the search query processing as a whole, see Fig. 8.

A list of SPARQL queries that can be executed is obtained as the output of the third stage.

Fig. 8 shows an exemplary evaluation and an example of the search query processing as a whole.

At step 818, a search query is received, e.g. "Flights from Ufa".

At step 828, keywords "flight" and "Ufa" are extracted.

At step 838, proper names are identified among the keywords, in particular, a search for proper names is performed in the dictionaries of first names, surnames and patronymics, cities, flights, names of airplanes, flight codes. Thus, "Ufa" is identified as a name in the dictionary of cities.

At step 848, suitable SPARQL queries are selected, in particular:
1. Flights from city N
2. Number of flights from city N
3. Parameters of the airport of N,
where "Ufa" is substituted for N.

At step 858, ranking of each query is performed as a function of importance of the entity and degree of correspondence to the user query, thus, the two first queries (with the substituted value of "Ufa": "Flights from the city of Ufa" and "The number of flights from the city of Ufa") have the same correspondence, so the results of both queries are presented to the user. The third query has a lower correspondence, since the word "flight" is not related to the query.

In a particular embodiment, the search can be performed in a dedicated section of an information system created specifically for this purpose, while the search start screen containing a search field located, for example, in the center of the screen, is displayed by default upon the user's entry to the section.

A list of the latest queries of the current user can also be presented (in particular, displayed) to the user, while, in a particular embodiment, only the proprietary queries are displayed for each particular user. The following can be displayed for each query: an icon for query deletion from the list; (full) query text, wherein, upon selection of the query text, it can be copied into the search field, and a repeated search can be performed for this query; and the number of results found for the query.

As a result of the search, a screen of found results is displayed, in particular, the content of the "card" of the first found object is opened.

The "card", for example, counterparty's "card" may include general information on the counterparty; "Bank details" block; Block of switchable tabs: "Parameters" (related to the contracts with this counterparty); "Contracts" (of this counterparty); "Counterparty check" (company reliability parameters); "Associated companies" (list of affiliates including those among the company's counterparties).

The "Parameters" tab may contain data on the activities of a counterparty, e.g. presented in the form of charts: share of the counterparty in its category, for example, the share for the current year; historical data on the counterparty's share in its category; historical data on the number of contracts with the counterparty by years; historical data on the amounts of contracts with the counterparty by years.

The "Contracts" tab may include a list of the counterparty's contracts sorted by the date of execution (from latest to newest), wherein the closed contracts are displayed at the very bottom of the list. A list of addenda (if any) can be expanded for each contract.

The "Counterparty check" tab may contain the results of a check of reliability of this counterparty obtained from a third-party information system: general results (e.g. "Check required"); lists of factors found for the counterparty: stop factors, risk factors, reliability factors.

The "Associated companies" tab may contain a list of companies affiliated with the counterparty, and the summary values for these companies (for those that are also counterparties).

The displayed information may contain a list of affiliated companies grouped by the type of association with the counterparty (e.g. "holding structure" or "by founder"); full company name (with a link to view the company card, if it is a counterparty); company taxpayer ID; a mark whether it is a counterparty; number of contracts and total amount of these contracts (for counterparties only); list of parameters similar to those specified in the "Parameters" tab, wherein these charts may individually specify the total shares/values of the affiliated counterparties in addition to the parameters of the current counterparty.

A contract "card" may contain a full set of data on the contract; a list of all addenda available for this contract (displayed in the card as a list, a similar card can be opened for each addendum). An addendum "card" may contain a full set of data on the addendum: data on the main contract (composition of data similar to the contract list).

During execution and processing of search queries, the queries may be formulated, for example, as "Flights from Moscow", "Flights Moscow Paris", "Departures from Sheremetyevo", etc., to display a list of flights. For example, a query for flights may have the following format (composition): [flight/synonyms] {city name} or [flight/synonyms] {city name 1} {city name 2}, or [flight/synonyms] {airport name}, or [flight/synonyms] {airport name 1} {airport name 2}. Processing of such queries results in the presentation of the data to the user, for example, in the format of a flight table (individual flights with filters, etc.) for all departures from an airport, and all arrivals to the airport.

The list of results may be grouped by flight destination. Thus, for example, the results for a search query "flights Moscow Paris" are displayed in two flight tables: Moscow - Paris and Paris - Moscow. Flights from different departure airports (or to different arrival airports) can be separated in the search results. If one city is specified, then the flights from this city (to any city); and flights to this city (from any other city) will be displayed.

After selection of an option in the list of the found items, a flight table is presented to the user.

Table filters:
- departure airport. The first item from the search query is selected by default. Any other option or a neutral option "Any airport" may be selected;
- arrival airport. The second item from the search query (if any) is selected by default. Any other option or a neutral option "Any airport" may be selected.
- filter by flight number (by substring occurrence);
- flights: completed / scheduled (toggle switch);
- departure date (date range; by default over the last week including the current day);
- delays (selection from a list): "Not important" / "None" / "Any delays" / "Takeoff delays" / "Departure delays" / "Arrival delays".

Upon a search for an employee by the surname and identifiers, the queries may be formulated, for example, as "Pilot Kozlov Moscow", "Employee 2345 123456", "Visa 4235467".

A query for employee search may have the following format [employee/synonyms] {employee surname in Russian} {employee first name in Russian} {employee's city of residence}, wherein each variable is optional, or [employee/synonyms] {employee surname in English} {employee first name in English}, wherein each variable is optional, or [employee/synonyms] {employee ID number}, or [employee/synonyms] {number of contract with employee}, or [employee/synonyms] {employee's Russian internal passport number}, or [employee/synonyms] {employee's travel passport number}, or [employee/synonyms] {employee's visa country} {employee's visa number}.

The employee "card" may contain the following components:
- general information on employee, for example, employee's full name, employee's position, date of dismissal, place of residence, birth date, age, pension, permits, total flight hours, flight hours as pilot-in-command, employment contract with validity period, employee's ID number, years of employment;
- block of switchable tabs: "Main" (information on positions, training, achievements, personal data); "Documents"; "Permits and flight hours"; "Violations"; "Flights".

The "Main" tab may contain the data specified below:
- table of positions in Aeroflot (AFLT) from last to first;
- education documents;
- table of completed training courses (from last to first);
- list of awards;
- personal data.

The "Documents" tab may contain the data specified below:
- list of HR record documents for an employee (from last to first);
- internal passport details;
- travel passport details;
- data on valid visas (sorted by date of expiry, in descending order);
- data on invalid visas (sorted by the date of expiry, in descending order);

The "Violations" tab may contain, for example, a table of penalties.

The "Flights" tab, for example, may contain a table of flights performed by the employee.

## Claims

1. A method for processing search queries for a plurality of unstructured relational databases, wherein each of the databases comprises preset report forms with preset record display forms in reports, the method consisting in the following:
records in databases are indexed by forming a common index, and preferential record display forms are used for indexing each data record;
after an initial search query is made, the query terms are converted into terms corresponding to the preferential record display forms;
relevant records are searched for using the converted query terms;
the preset report forms which use the relevant records found are determined; and
a report is generated about the relevant records found as a result of the search, using, to display the found relevant records, the preset report forms that use the found relevant records.

2. A method of Claim 1, wherein the preset report forms that use the found records display the records provided by the report forms that are associated with the found records.

3. A method of Claim 1, wherein the results are displayed using more than one report form for a single record.

4. A method of Claim 1, wherein the possibility of accurate correspondence of the found relevant records to the initial terms of a search query is additionally checked, and only the records that can provide accurate correspondence are used for generation of the search report.

5. A method of Claim 1, wherein the converted query terms are used to create a converted query used to search for the relevant records.

6. A method of Claim 1, wherein, when alternative terms are found corresponding to the preferable forms of record display for a single search term, several converted queries are created, each containing one of the alternative terms.

7. A method of Claim 1, wherein, when no relevant records are found fully corresponding to the query terms, a search report is created containing a list of the relevant records in the format of presentation of the initial query terms.
